# EUROPEAN PATENT SPECIFICATION

(11) **EP 0 847 663 B1**
(45) Date of publication and mention of the grant of the patent: **10.03.1999**
(21) Application number: 96929398.4
(22) Date of filing: 02.09.1996
(51) Int. Cl.: H04R 1/02, B60R 11/02, H04R 7/06

(54) **PASSENGER VEHICLES INCORPORATING LOUDSPEAKERS COMPRISING PANEL-FORM ACOUSTIC RADIATING ELEMENTS**
PERSONENKRAFTWAGEN MIT LAUTSPRECHERN MIT PANEELFÖRMIGEN AKUSTISCHEN ABSTRAHLELEMENTEN
VEHICULES DE TRANSPORT DE PASSAGERS A HAUT-PARLEURS MUNIS D'ELEMENTS RADIANTS ACOUSTIQUES EN FORME DE PANNEAUX

(30) Priority: 02.09.1995 GB 9517918; 31.10.1995 GB 9522281; 30.03.1996 GB 9606836
(43) Date of publication of application: 17.06.1998
(73) Proprietor: New Transducers Limited, Huntingdon, Cambridgeshire PE18 6ED (GB)
(72) Inventor: AZIMA, Henry, Cambridge CB2 2TT (GB); COLLOMS, Martin, London NW2 2DA (GB); HARRIS, Neil, Cambridge CB2 5JF (GB)
(74) Representative: Maguire, Peter Albert
(86) International application number: GB9602157
(87) International publication number: WO9709844

(56) References cited:
- EP-A- 0 054 945
- EP-A- 0 553 525
- WO-A-92/03024
- US-A- 3 247 925
- US-A- 4 392 027
- US-A- 4 720 867

## Description

### TECHNICAL FIELD

The invention relates to passenger vehicles and more particularly to passenger vehicles incorporating loudspeakers comprising panel-form acoustic radiating elements.

### BACKGROUND ART

It is known from GB-A-2262861 to suggest a panel-form loudspeaker comprising:-
a resonant multi-mode radiator element being a unitary sandwich panel formed of two skins of material with a spacing core of transverse cellular construction, wherein the panel is such as to have ratio of bending stiffness (B), in all orientations, to the cube power of panel mass per unit surface area (µ) of at least 10;
a mounting means which supports the panel or attaches to it a supporting body, in a free undamped manner;
and an electro-mechanical drive means coupled to the panel which serves to excite a multi-modal resonance in the radiator panel in response to an electrical input within a working frequency band for the loudspeaker.

US-A-4,392,027 of MESSERSCHMITT discloses a loudspeaker which forms an entire interior wall or ceiling panel in an aircraft or the like. The interior wall and ceiling panels are said to be flexible.

### DISCLOSURE OF INVENTION

Embodiments of the present invention use members of nature, structure and configuration achievable generally and/or specifically by implementing teachings of our co-pending PCT publication No. W097/09842 of even date herewith. Such members thus have capability to sustain and propagate input vibrational energy by bending waves in operative area(s) extending transversely of thickness often but not necessarily to edges of the member(s); are configured with or without anisotropy of bending stiffness to have resonant mode vibration components distributed over said area(s) beneficially for acoustic coupling with ambient air; and have predetermined preferential locations or sites within said area for transducer means, particularly operationally active or moving part(s) thereof effective in relation to acoustic vibrational activity in said area(s) and signals, usually electrical, corresponding to acoustic content of such vibrational activity. Uses are envisaged in co-pending International publication No. WO97/09842 of even date herewith for such members as or in "passive" acoustic devices without transducer means, such as for reverberation or for acoustic filtering or for acoustically "voicing" a space or room; and as or in "active" acoustic devices with transducer means, such as in a remarkably wide range of sources of sound or loudspeakers when supplied with input signals to be converted to said sound, or in such as microphones when exposed to sound to be converted into other signals.

This invention is particularly concerned with active acoustic devices in the form of loudspeakers for use in passenger vehicles such as automobile, aircraft, boats, railway trains etc.

Members as above are herein called distributed mode acoustic radiators and are intended to be characterised as in the above PCT application and/or otherwise as specifically provided herein.

The invention is a vehicle having a passenger compartment, and a loudspeaker in the passenger compartment, characterised in that the loudspeaker comprises a stiff lightweight member having capability to sustain and propagate input vibrational energy by bending waves in at least one operative area extending transversely of thickness to have resonant mode vibration components distributed over said at least one area and have predetermined preferential locations or sites within said area for transducer means and having a transducer mounted wholly and exclusively on said member at one of said locations or sites to vibrate the member to cause it to resonate forming an acoustic radiator which provides an acoustic output when resonating. The vehicle may be characterised by a formed component in or forming part of the passenger compartment, and in that the radiator is integral with the component. The radiator may comprise a cellular core sandwiched between skin layers, and wherein one of the skins is integral with the formed component. The said one skin may be thin in comparison to the average wall thickness of the component. The said one skin may be surrounded by a groove in the component, the groove defining a resilient surround for the radiator. The groove may be slotted to increase the compliance of the suspension. The radiator may be integral with a passenger seat in the vehicle. The radiator may be integral with the lining of a door into the passenger compartment. The radiator may be integral with the interior of the passenger compartment.

From another aspect, the invention is a vehicle component comprising a loudspeaker, characterised by a member having capability to sustain and propagate input vibrational energy by bending waves in at least one operative area extending transversely of thickness to have resonant mode vibration components distributed over said at least one area and have predetermined preferential locations or sites within said area for transducer means and having a transducer mounted on said member at one of said locations or sites to vibrate the member to cause it to resonate forming an acoustic radiator which provides an acoustic output when resonating.

### BRIEF DESCRIPTION OF DRAWINGS

The invention is diagrammatically illustrated, by way of example, in the accompanying drawings, in which:-
Figure 1 is a diagram showing a distributed-mode loudspeaker as described and claimed in our co-pending International publication No. W097/09842;
Figure 2a is a partial section on the line A-A of Figure 1;
Figure 2b is an enlarged cross-section through a distributed mode radiator of the kind shown in Figure 2a and showing two alternative constructions;
Figure 3 is a perspective view of the passenger cabin of a vehicle;
Figure 4 is a partial cross-sectional view of a detail of Figure 3;
Figure 5 is a perspective view of a prior art automobile door;
Figure 6 is a perspective view of an automobile door according to the invention;
Figure 7 is a partial cross-sectional view of a detail from Figure 6;
Figure 8 is a perspective view of an automobile, and
Figure 9 is a partial cross-section view of a detail from Figure 8.

### BEST MODES FOR CARRYING OUT THE INVENTION

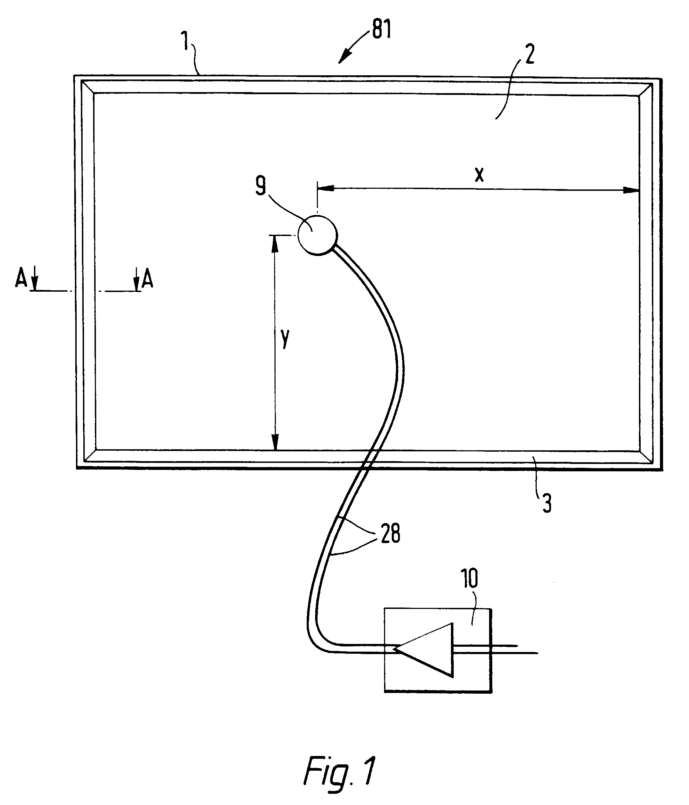

Referring to Figure 1 of the drawings, there is shown a panel-form loudspeaker (81) of the kind described and claimed in our co-pending International publication No. W097/09842 of even date herewith comprising a rectangular frame (1) carrying a resilient suspension (3) round its inner periphery which supports a distributed mode sound radiating panel (2). A transducer (9) e.g as described in detail with reference to our co-pending International publication Nos. WO97/09859, WO97/09861, WO97/09858 of even date herewith, is mounted wholly and exclusively on or in the panel (2) at a predetermined location defined by dimensions x and y, the position of which location is calculated as described in our co-pending International publication No. W097/09842 of even date herewith, to launch bending waves into the panel to cause the panel to resonate to radiate an acoustic output.

The transducer (9) is driven by a signal amplifier (10), e.g. an audio amplifier, connected to the transducer by conductors (28) . Amplifier loading and power requirements can be entirely normal, similar to conventional cone type speakers, sensitivity being of the order of 86 - 88dB/watt under room loaded conditions. Amplifier load impedance is largely resistive at 6 ohms, power handling 20-80 watts. Where the panel core and/or skins are of metal, they may be made to act as a heat sink for the transducer to remove heat from the motor coil of the transducer and thus improve power handling.

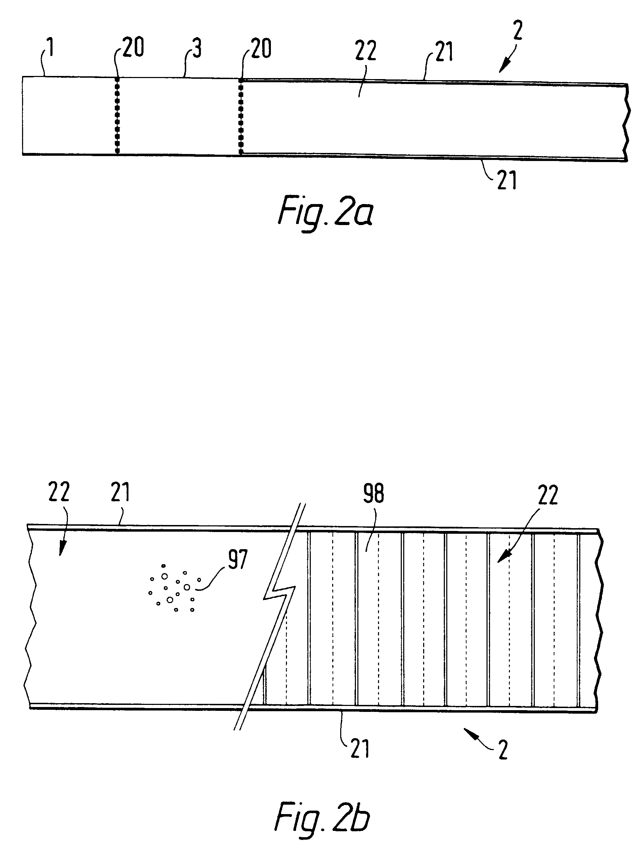

Figures 2a and 2b are partial typical cross-sections through the loudspeaker (81) of Figure 1. Figure 2a shows that the frame (1), surround (3) and panel (2) are connected together by respective adhesive-bonded joints (20). Suitable materials for the frame include lightweight framing, e.g. picture framing of extruded metal e.g. aluminium alloy or plastics. Suitable surround materials include resilient materials such as foam rubber and foam plastics. Suitable adhesives for the joints (20) include epoxy, acrylic and cyano-acrylate etc. adhesives.

Figure 2b illustrates, to an enlarged scale, that the panel (2) is a rigid lightweight panel having a core (22) e.g. of a rigid plastics foam (97) e.g. cross linked polyvinylchloride or a cellular matrix (98) i.e. a honeycomb matrix of metal foil, plastics or the like, with the cells extending transversely to the plane of the panel, and enclosed by opposed skins (21) e.g. of paper, card, plastics or metal foil or sheet. Where the skins are of plastics, they may be reinforced with fibres e.g. of carbon, glass, Kevlar (RTM) or the like in a manner known per se to increase their modulus.

Envisaged skin layer materials and reinforcements thus include carbon, glass, Kevlar (RTM), Nomex (RTM) i.e. aramid etc. fibres in various lays and weaves, as well as paper, bonded paper laminates, melamine, and various synthetic plastics films of high modulus, such as Mylar (RTM), Kaptan (RTM), polycarbonate, phenolic, polyester or related plastics, and fibre reinforced plastics, etc. and metal sheet or foil. Investigation of the Vectra grade of liquid crystal polymer thermoplastics shows that they may be useful for the injection moulding of ultra thin skins or shells of smaller size, say up to around 30cm diameter. This material self forms an orientated crystal structure in the direction of injection, a preferred orientation for the good propagation of treble energy from the driving point to the panel perimeter.

Additional such moulding for this and other thermoplastics allows for the mould tooling to carry location and registration features such as grooves or rings for the accurate location of transducer parts e.g. the motor coil, and the magnet suspension. Additional with some weaker core materials it is calculated that it would be advantageous to increase the skin thickness locally e.g. in an area or annulus up to 150% of the transducer diameter, to reinforce that area and beneficially couple vibration energy into the panel. High frequency response will be improved with the softer foam materials by this means.

Envisaged core layer materials include fabricated honeycombs or corrugations of aluminium alloy sheet or foil, or Kevlar (RTM), Nomex (RTM), plain or bonded papers, and various synthetic plastics films, as well as expanded or foamed plastics or pulp materials, even aerogel metals if of suitably low density. Some suitable core layer materials effectively exhibit usable self-skinning in their manufacture and/or otherwise have enough inherent stiffness for use without lamination between skin layers. A high performance cellular core material is known under the trade name 'Rohacell' which may be suitable as a radiator panel and which is without skins. In practical terms, the aim is for an overall lightness and stiffness suited to a particular purpose, specifically including optimising contributions from core and skin layers and transitions between them.

Several of the preferred formulations for the panel employ metal and metal alloy skins, or alternatively a carbon fibre reinforcement. Both of these, and also designs with an alloy Aerogel or metal honeycomb core, will have substantial radio frequency screening properties which should be important in several EMC applications. Conventional panel or cone type speakers have no inherent EMC screening capability.

In addition the preferred form of piezo and electro dynamic transducers have negligible electromagnetic radiation or stray magnet fields. Conventional speakers have a large magnetic field, up to 1 metre distant unless specific compensation counter measures are taken.

Where it is important to maintain the screening in an application, electrical connection can be made to the conductive parts of an appropriate DML panel or an electrically conductive foam or similar interface may be used for the edge mounting.

The suspension (3) may damp the edges of the panel (2) to prevent excessive edge movement of the panel. Additionally or alternatively, further damping may be applied, e.g. as patches, bonded to the panel in selected positions to damp excessive movement to distribute resonance equally over the panel. The patches may be of bitumen-based material, as commonly used in conventional loudspeaker enclosures or may be of a resilient or rigid polymeric sheet material. Some materials, notably paper and card, and some cores may be self-damping. Where desired, the damping may be increased in the construction of the panels by employing resiliently setting, rather than rigid setting adhesives.

Effective said selective damping includes specific application to the panel including its sheet material of means permanently associated therewith. Edges and corners can be particularly significant for dominant and less dispersed low frequency vibration modes of panels hereof. Edge-wise fixing of damping means can usefully lead to a panel with its said sheet material fully framed, though their corners can often be relatively free, say for desired extension to lower frequency operation. Attachment can be by adhesive or self-adhesive materials. Other forms of useful damping, particularly in terms of more subtle effects and/or mid- and higher frequencies can be by way of suitable mass or masses affixed to the sheet material at predetermined effective medial localised positions of said area.

An acoustic panel as described above is bidirectional. The sound energy from the back is not strongly phase related to that from the front. Consequently there is the benefit of overall summation of acoustic power in the room, sound energy of uniform frequency distribution, reduced reflective and standing wave effects and with the advantage of superior reproduction of the natural space and ambience in the reproduced sound recordings.

While the radiation from the acoustic panel is largely non-directional, the percentage of phase related information increases off axis. For improved focus for the phantom stereo image, placement of the speakers, like pictures, at the usual standing person height, confers the benefit of a moderate off-axis placement for the normally seated listener optimising the stereo effect. Likewise the triangular left/right geometry with respect to the listener provides a further angular component. Good stereo is thus obtainable.

There is a further advantage for a group of listeners compared with conventional speaker reproduction. The intrinsically dispersed nature of acoustic panel sound radiation gives it a sound volume which does not obey the inverse square law for distance for an equivalent point source. Because the intensity fall-off with distance is much less than predicted by inverse square law then consequently for off-centre and poorly placed listeners the intensity field for the panel speaker promotes a superior stereo effect compared to conventional speakers. This is because the off-centre placed listener does not suffer the doubled problem due to proximity to the nearer speaker; firstly the excessive increase in loudness from the nearer speaker, and then the corresponding decrease in loudness from the further loudspeaker.

There is also the advantage of a flat, lightweight panel-form speaker, visually attractive, of good sound quality and requiring only one transducer and no crossover for a full range sound from each panel diaphragm.

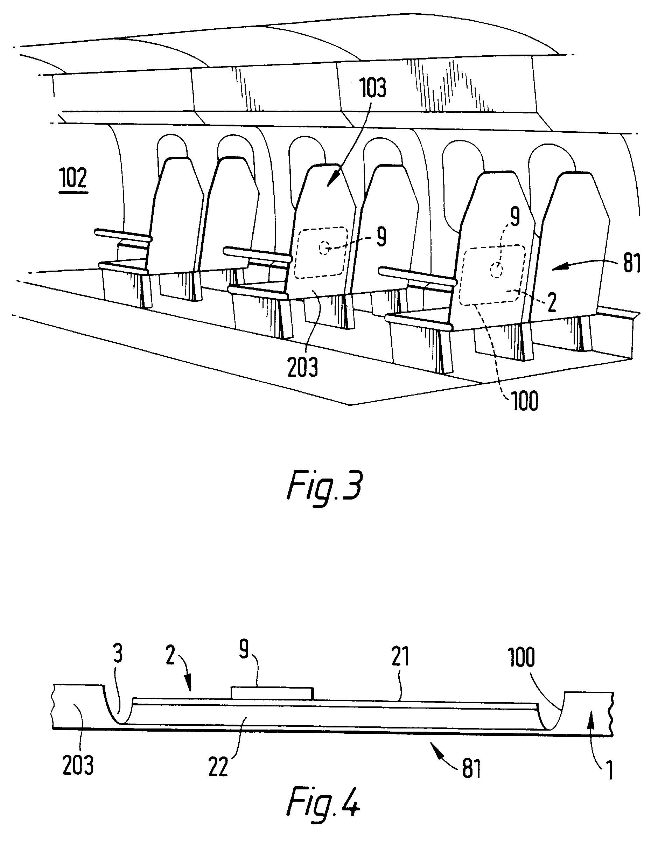

In Figures 3 and 4 there is shown the cabin (102) of a passenger vehicle, e.g. an aircraft, railway carriage, motor coach or ferry, having rows of passenger seats (103) into the backs (203) of which are incorporated loudspeakers (81). As is conventional the seat backs (203) are shells moulded from a suitable plastics material.

As shown more particularly in Figure 4, the moulded backs (203) of the seats (103) are moulded with generally rectangular relatively thin areas (2) bounded by grooves (100). These areas (2) are stiffened on their inner faces with a lightweight cellular core (22) which is backed by an inner skin (21) to form a rigid lightweight multi-mode radiator panel (2) of the kind described above e.g. with reference to Figures 1 and 2.

The grooves (100) effectively define a resilient suspension (3) and the surrounding seat backs (203) form the frame (1). A transducer (9) e.g. of the kind described in detail in our said co-pending International publication Nos. W097/09859, W097/09861, W097/09858, is attached to each panel (2) to launch bending waves into the panels to cause them to resonate to produce an acoustic output.

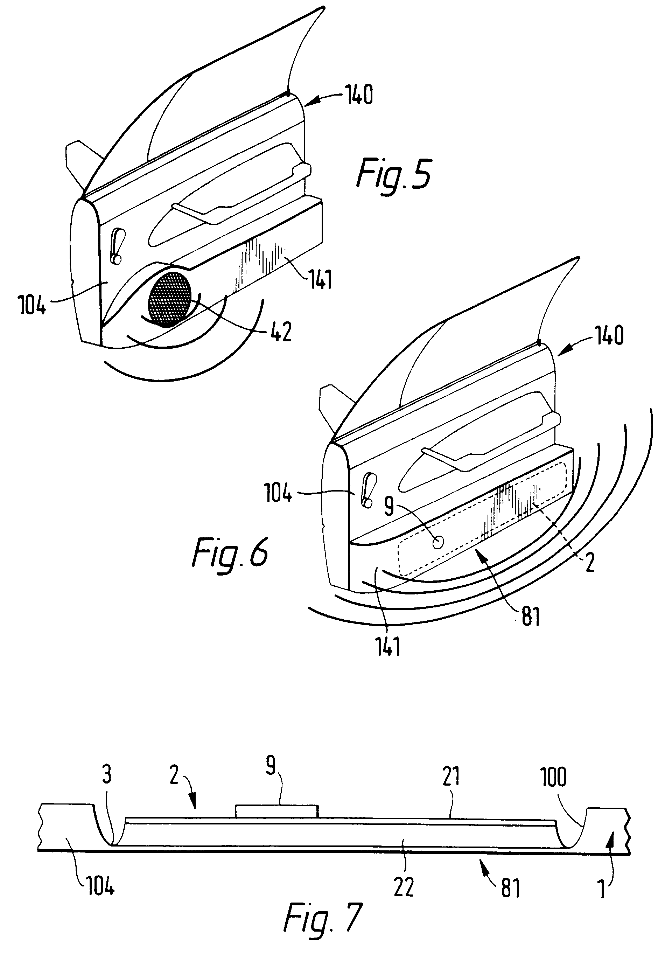

Figure 5 illustrates the conventional domestic automobile door (140) in which a conventional cone type pistonic loudspeaker drive unit (42) is mounted in a pocket (141) in a moulded or pressed door lining (104). The normal consequence of this is that the sound radiated by the drive unit (42) is directed towards the feet of the occupant(s) of the automobile, matters being made worse by the directional characteristics of conventional loudspeaker drivers.

In Figure 6 there is shown an automobile door (140) having a door lining (104) having a pocket (141) incorporating a loudspeaker (81) according to the present invention.

As is normal, the door lining (104) is moulded or pressed from plastics or fibreboard. The lining is formed with a generally rectangular thin area (2) bounded by a groove (100). The area (2) is stiffened on its inner face with a lightweight cellular core (22) which is backed by an inner skin (21) to form a rigid lightweight multi-mode radiator panel (2) of the kind described above with reference to Figures 1 and 2. The groove effectively defines a resilient suspension (3) and the surrounding lining (104) forms the frame (1). The groove may be slotted as described in relation to Figure 4.

A transducer (9) e.g. of the kind described in detail in our said co-pending International publication Nos. W097/09859, W097/09861, W097/09858, is attached to the panel (2) to launch bending waves into the panel to cause it to resonate to produce an acoustic output. The wide dispersion of sound produced by a loudspeaker of the invention will provide an improved sound field for the occupants of the vehicle, with much reduced local 'hot' spots.

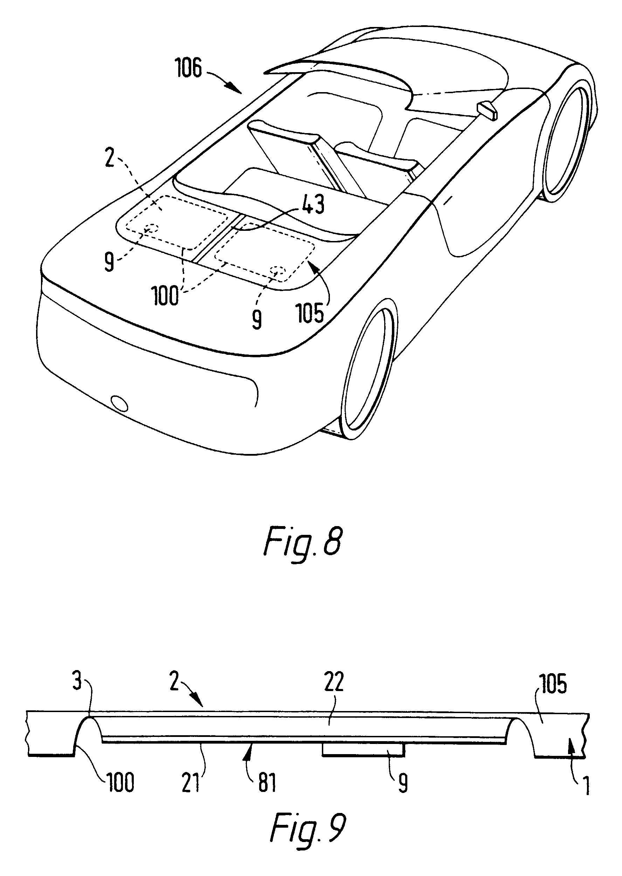

Figure 8 and 9 show an automobile (106) in which loudspeakers (81) are provided in a parcel shelf (105) towards the rear of the automobile. It will be noted that the parcel shelf is divided longitudinally by means of a structural rib (43) into two areas to produce a stereo pair of loudspeakers (81). Otherwise the configuration of the loudspeakers is as shown in Figures 6 and 7.

## Claims

1. A vehicle having a passenger compartment (102), and a loudspeaker (81) in the passenger compartment, characterised in that the loudspeaker comprises a stiff lightweight member (2) having capability to sustain and propagate input vibrational energy by bending waves in at least one operative area extending transversely of thickness to have resonant mode vibration components distributed over said at least one area and have predetermined preferential locations or sites within said area for transducer means and having a transducer (9) mounted wholly and exclusively on said member at one of said locations or sites to vibrate the member to cause it to resonate forming an acoustic radiator which provides an acoustic output when resonating.

2. A vehicle according to claim 1, characterised by a formed component (103,104,105) in or forming part of the passenger compartment, and in that the radiator (2) is integral with the component.

3. A vehicle according to claim 2, characterised in that the radiator (2) comprises a cellular core (22) sandwiched between skin layers (21), and wherein one of the skins is integral with the formed component (103,104,105).

4. A vehicle according to claim 3, characterised in that the said one skin (21) is thin in comparison to the average wall thickness of the component (103,104,105).

5. A vehicle according to any one of claims 2 to 4, wherein the said one skin (21) is surrounded by a groove (100) in the component, the groove defining a resilient surround (3) for the radiator.

6. A vehicle according to claim 5, characterised in that the groove (100) is slotted to increase the compliance of the suspension.

7. A vehicle according to any preceding claim, characterised in that the radiator (2) is integral with a passenger seat (103) in the vehicle.

8. A vehicle according to any one of claims 1 to 6, characterised in that the radiator (2) is integral with the lining (104) of a door (140) into the passenger compartment.

9. A vehicle according to any one of claims 1 to 6, characterised in that the radiator (2) is integral with the interior of the passenger compartment (102).

10. A vehicle component (103,104,105) comprising a loudspeaker (81), characterised by a member (2) having capability to sustain and propagate input vibrational energy by bending waves in at least one operative area extending transversely of thickness to have resonant mode vibration components distributed over said at least one area and have predetermined preferential locations or sites within said area for transducer means and having a transducer (9) mounted on said member (2) at one of said locations or sites to vibrate the member to cause it to resonate forming an acoustic radiator which provides an acoustic output when resonating.

## Patentansprüche

1. Fahrzeug mit einem Fahrgastraum (102) und einem Lautsprecher (81) in dem Fahrgastraum, dadurch gekennzeichnet, daß der Lautsprecher ein steifes leichtes Bauteil (2) mit der Fähigkeit aufweist, eingespeiste Schwingungsenergie aufrechtzuerhalten und durch Biegewellen in zumindest einer quer zur Dicke verlaufenden wirksamen Fläche fortzupflanzen, um Resonanzmoden-Schwingungskomponenten über die zumindest eine Fläche zu verteilen mit vorbestimmten bevorzugten Orten oder Stellen innerhalb der Fläche für Wandlereinrichtungen, und mit einem Wandler (9), der ganz und ausschließlich auf dem Bauteil an einem der Orte oder Stellen angebracht ist, um das Bauteil in Schwingung zu versetzen, um es in Resonanz treten zu lassen, wobei ein akustischer Strahler geschaffen wird, der ein akustisches Ausgangssignal liefert, wenn er in Resonanz schwingt.

2. Fahrzeug nach Anspruch 1, gekennzeichnet durch eine geformte Komponente (103, 104, 105) in dem Fahrgastraum oder eine, die einen Teil desselben bildet, und dadurch, daß der Strahler (2) mit der Komponente einteilig ist.

3. Fahrzeug nach Anspruch 2, dadurch gekennzeichnet, daß der Strahler (2) einen zwischen Hautschichten (21) sandwichartig aufgenommenen zellularen Kern (22) aufweist, und worin eine der Häute mit der geformten Komponente (103, 104, 105) einteilig ist.

4. Fahrzeug nach Anspruch 3, dadurch gekennzeichnet, daß die eine Haut (21) im Vergleich zur durchschnittlichen Wanddicke der Komponente (103, 104, 105) dünn ist.

5. Fahrzeug nach einem der Ansprüche 2 bis 4, worin die eine Haut (21) durch eine Rille (100) in der Komponente umgeben ist, wobei die Rille eine federnde Einfassung bzw. Aufhängung (3) für den Strahler definiert.

6. Fahrzeug nach Anspruch 5, dadurch gekennzeichnet, daß die Rille (100) geschlitzt ist, um die Nachgiebigkeit der Aufhängung zu erhöhen.

7. Fahrzeug nach einem der vorhergehenden Ansprüche, dadurch gekennzeichnet, daß der Strahler (2) mit einem Fahrgastsitz (103) in dem Fahrzeug einteilig ist.

8. Fahrzeug nach einem der Ansprüche 1 bis 6, dadurch gekennzeichnet, daß der Strahler (2) mit der Verkleidung (104) einer Tür (140) in den Fahrgastraum einteilig ist.

9. Fahrzeug nach einem der Ansprüche 1 bis 6, dadurch gekennzeichnet, daß der Strahler (2) mit dem Inneren des Fahrgastraums (102) einteilig ist.

10. Fahrzeugkomponente (103, 104, 105) mit einem Lautsprecher (81), gekennzeichnet durch ein Bauteil (2) mit der Fähigkeit, eingespeiste Schwingungsenergie aufrechtzuerhalten und durch Biegewellen in zumindest einer quer zur Dicke verlaufenden wirksamen Fläche fortzupflanzen, um Resonanzmoden-Schwingungskomponenten über die zumindest eine Fläche zu verteilen mit vorbestimmten bevorzugten Orten oder Stellen innerhalb der Fläche für Wandlereinrichtungen, und mit einem Wandler (9), der an dem Bauteil (2) an einem der Orte oder Stellen angebracht ist, um das Bauteil in Schwingung zu versetzen, um es in Resonanz treten zu lassen, wobei ein akustischer Strahler geschaffen wird, der ein akustisches Ausgangssignal liefert, wenn er in Resonanz schwingt.

## Revendications

1. Un véhicule ayant un compartiment de passagers (102) et un haut-parleur (81) dans le compartiment de passagers, caractérisé en ce que le haut-parleur comprend un élément (2) léger et rigide ayant la possibilité d'entretenir et de faire propager de l'énergie vibratoire d'entrée, par des ondes de flexion, dans au moins une zone active s'étendant transversalement à l'épaisseur, pour avoir des composantes de vibration de mode résonnant réparties sur la zone précitée, et pour avoir des emplacements ou des sites préférentiels prédéterminés à l'intérieur de cette zone pour des moyens à transducteur, et ayant un transducteur (9) monté complètement et exclusivement sur l'élément, à l'un des emplacements ou des sites, pour faire vibrer l'élément de façon qu'il résonne en formant un radiateur acoustique qui produit une émission acoustique lorsqu'il résonne.

2. Un véhicule selon la revendication 1, caractérisé par un composant formé (103, 104, 105) dans le compartiment de passagers, ou faisant partie de celui-ci, et en ce que le radiateur (2) est intégré au composant.

3. Un véhicule selon la revendication 2, caractérisé en ce que le radiateur (2) comprend une âme cellulaire (22) intercalée entre des couches de peau (21), et dans lequel l'une des peaux est intégrée au composant formé (103, 104, 105).

4. Un véhicule selon la revendication 3, caractérisé en ce que la peau (21) précitée est mince en comparaison avec l'épaisseur de paroi moyenne du composant (103, 104, 105).

5. Un véhicule selon l'une quelconque des revendications 2 à 4, dans lequel la peau (21) précitée est entourée par une gorge (100) dans le composant, la gorge définissant un pourtour (3) élastique pour le radiateur.

6. Un véhicule selon la revendication 5, caractérisé en ce que la gorge (100) comporte des fentes pour augmenter la souplesse de la suspension.

7. Un véhicule selon l'une quelconque des revendications précédentes, caractérisé en ce que le radiateur (2) est intégré à un siège de passager (103) dans le véhicule.

8. Un véhicule selon l'une quelconque des revendications 1 à 6, caractérisé en ce que le radiateur (2) est intégré à la garniture (104) d'une portière (140) dans le compartiment de passagers.

9. Un véhicule selon l'une quelconque des revendications 1 à 6, caractérisé en ce que le radiateur (2) est intégré à l'intérieur du compartiment de passagers (102).

10. Un composant (103, 104, 105) de véhicule comprenant un haut-parleur (81), caractérisé par un élément (2) ayant la possibilité d'entretenir et de faire propager de l'énergie vibratoire d'entrée, par des ondes de flexion, dans au moins une zone active s'étendant transversalement à l'épaisseur, pour avoir des composantes de vibration de mode résonnant réparties sur la zone précitée, et pour avoir des emplacements ou des sites préférentiels prédéterminés à l'intérieur de cette zone pour des moyens à transducteur, et ayant un transducteur (9) monté sur l'élément (2) à l'un des emplacements ou des sites, pour faire vibrer l'élément de façon qu'il résonne en formant un radiateur acoustique qui produit une émission acoustique lorsqu'il résonne.
